# EUROPEAN PATENT SPECIFICATION

(11) **EP 4 218 203 B1**
(45) Date of publication and mention of the grant of the patent: **16.10.2024**
(21) Application number: 21790327.7
(22) Date of filing: 09.09.2021
(51) Int. Cl.: H04L 9/40, G06F 3/01, H04L 67/131, H04N 7/15

(54) **RECOMMENDED AVATAR PLACEMENT IN AN ENVIRONMENTAL REPRESENTATION OF A MULTI-USER COMMUNICATION SESSION**
EMPFOHLENE AVATARPLATZIERUNG IN EINER UMGEBUNGSDARSTELLUNG EINER MEHRBENUTZERKOMMUNIKATIONSSITZUNG
PLACEMENT D'AVATAR RECOMMANDÉ DANS UNE REPRÉSENTATION ENVIRONNEMENTALE D'UNE SESSION DE COMMUNICATION DE MULTIPLES UTILISATEURS

(30) Priority: 24.09.2020 US 202063082715 P
(43) Date of publication of application: 02.08.2023
(73) Proprietor: Apple Inc., Cupertino, CA 95014 (US)
(72) Inventor: HENDERSON, Nicholas W., Cupertino, CA 95014 (US); SMITH, Connor A., Cupertino, CA 95014 (US)
(74) Representative: Lang, Johannes
(86) International application number: PCT/US2021/049642
(87) International publication number: WO 2022/066423

(56) References cited:
- US-B1- 6 175 842
- US-B2- 10 269 089
- KRAY CHRISTIAN ET AL: "Natural Interaction with Video Environments Using Gestures and a Mirror Image Avatar", 30 August 2015, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 387 - 394, ISBN: 978-3-540-74549-5, XP047319095
- KRAY CHRISTIAN ET AL: "Natural Interaction with Video Environments Using Gestures and a Mirror Image Avatar", 30 August 2015, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 387 - 394, ISBN: 978-3-319-10403-4, XP047519173

## Description

### Background

This disclosure relates generally to image processing. More particularly, but not by way of limitation, this disclosure relates to techniques and systems for automatically recommending avatar placement in an environmental representation of a multi-user communication session.

Some devices are capable of generating and presenting extended reality (XR) environments. An XR environment may include a wholly or partially simulated environment that people sense and/or interact with *via* an electronic system. In XR, a subset of a person's physical motions, or representations thereof, are tracked, and, in response, one or more characteristics of one or more virtual objects simulated in the XR environment are adjusted in a manner that comports with at least one law of physics. Some XR environments allow multiple users to interact with each other within the XR environment, such as for a multi-user communication session. However, what is needed is an improved technique to recommend avatar placement in an XR environment. US to 269 089 B2 describes a multi-user virtual reality and/or augmented reality cluster system enabling the projection and tracking of users in a simulated environment. The disclosed cluster system enables both timely user action display in the first person and a timely view of a user's action by other participants of the simulation. The cluster system integrates motion capture cameras, distributed computing, and tracking devices to provide a simulation which seems lifelike to all participants and observers.

### Brief Description of the Drawings

FIG. **1** shows, in block diagram form, exemplary systems for use in various extended reality technologies.
FIG. **2** shows a diagram of example operating environments, according to one or more embodiments.
FIG. **3** shows, in flow chart form, an example method for improving recommended avatar placement in an XR environment, according to one or more embodiments.
FIG. **4** shows, in flow chart form, a further example method for improving recommended avatar placement in an XR environment including identifying candidate avatar placements, according to one or more embodiments.
FIG. **5** shows, in flow chart form, a further example method for improving recommended avatar placement in an XR environment including recommending avatar placement for multiple avatars and adjusting a spatial position of one or more of the selected avatar placements, according to one or more embodiments.
FIG. **6** shows, in flow chart form, a further example method for improving recommended avatar placement in an XR environment including recommending content placement, according to one or more embodiments.
FIG. **7** shows, in flow chart form, a further example method for updating a recommended content placement based on a selected avatar placement, according to one or more embodiments.
FIG. **8** shows a diagram of an example operating environment and environmental representation of a multi-user communication session.
FIG. **9** shows, in flow chart form, an example process for resolving avatar placements for multiple users in a multi-user communication session, according to one or more embodiments.
FIGS. 10A-B depict an exemplary system for use in various extended reality technologies.

### Detailed Description

This disclosure pertains to systems, methods, and computer readable media to recommend avatar placement for a user in a multi-user communication session. To recommend an avatar placement, geometric information associated with a physical environment of a user participating in the multi-user communication session may be determined. The geometric information may include semantic information regarding vertical and horizontal surfaces in the physical environment, a blueprint for the physical environment, or the like. An activity type for the multi-user communication session may also be determined, and the recommended avatar placement is determined based on the geometric information and the activity type. In some embodiments, the recommended avatar placement is selected from a set of candidate avatar placements in the environmental representation. Then, an indication of the recommended avatar placement is displayed in an environmental representation of the multi-user communication session.

In some embodiments, the environmental representation is oriented based on the geometric information. In some embodiments, the geometric information is associated with a second physical environment associated with a second physical environment of a second user participating in the multi-user communication session. A second recommended avatar placement for the second user is determined based on the geometric information associated with the second physical environment, the activity type, and the recommended avatar placement for the first user. An indication of the second recommended avatar placement is displayed in the environmental representation. In some embodiments, the user and the second user select avatar placements, and the spatial position of the first or the second selected avatar placement is adjusted in the environmental representation. For example, the heights of the selected avatar placements may be set to be the same height.

In some embodiments, a recommended content placement for a shared content item is determined based on the geometric information and the activity type. For example, the activity type is associated with a boardgame, and the shared content item is a game board and game pieces. A recommended content placement for the shared content item may be determined to be on a table or other horizontal surface in the physical environment. The recommended content placement may be selected from candidate content placements in the environmental representations, or determined based on a characteristic of the shared content item. For example, the shared content item may be a vertical object, such that the recommended content placement is on a vertical surface in the environmental representation. In some embodiments, the recommended content placement may be determined based on a spatial relationship between the recommended avatar placement and the candidate content placements.

Various examples of electronic systems and techniques for using such systems in relation to various extended reality technologies are described.

A person can interact with and/or sense a physical environment or physical world without the aid of an electronic device. A physical environment can include physical features, such as a physical object or surface. An example of a physical environment is physical forest that includes physical plants and animals. A person can directly sense and/or interact with a physical environment through various means, such as hearing, sight, taste, touch, and smell. In contrast, a person can use an electronic device to interact with and/or sense an extended reality (XR) environment that is wholly or partially simulated. The XR environment can include mixed reality (MR) content, augmented reality (AR) content, virtual reality (VR) content, and/or the like. With an XR system, some of a person's physical motions, or representations thereof, can be tracked and, in response, characteristics of virtual objects simulated in the XR environment can be adjusted in a manner that complies with at least one law of physics. For instance, the XR system can detect the movement of a user's head and adjust graphical content and auditory content presented to the user similar to how such views and sounds would change in a physical environment. In another example, the XR system can detect movement of an electronic device that presents the XR environment (e.g., a mobile phone, tablet, laptop, or the like) and adjust graphical content and auditory content presented to the user similar to how such views and sounds would change in a physical environment. In some situations, the XR system can adjust characteristic(s) of graphical content in response to other inputs, such as a representation of a physical motion (e.g., a vocal command).

Many different types of electronic systems can enable a user to interact with and/or sense an XR environment. A non-exclusive list of examples include heads-up displays (HUDs), head mountable systems, projection-based systems, windows or vehicle windshields having integrated display capability, displays formed as lenses to be placed on users' eyes (e.g., contact lenses), headphones/earphones, input systems with or without haptic feedback (e.g., wearable or handheld controllers), speaker arrays, smartphones, tablets, and desktop/laptop computers. A head mountable system can have one or more speaker(s) and an opaque display. Other head mountable systems can be configured to accept an opaque external display (e.g., a smartphone). The head mountable system can include one or more image sensors to capture images/video of the physical environment and/or one or more microphones to capture audio of the physical environment. A head mountable system may have a transparent or translucent display, rather than an opaque display. The transparent or translucent display can have a medium through which light is directed to a user's eyes. The display may utilize various display technologies, such as uLEDs, OLEDs, LEDs, liquid crystal on silicon, laser scanning light source, digital light projection, or combinations thereof. An optical waveguide, an optical reflector, a hologram medium, an optical combiner, combinations thereof, or other similar technologies can be used for the medium. In some implementations, the transparent or translucent display can be selectively controlled to become opaque. Projection-based systems can utilize retinal projection technology that projects images onto users' retinas. Projection systems can also project virtual objects into the physical environment (e.g., as a hologram or onto a physical surface).

For purposes of this disclosure, a multi-user communication session can include an XR environment in which two or more devices are participating.

For purposes of this disclosure, a local multi-user communication device refers to a current device being described, or being controlled by a user being described, in a multi-user communication session.

For purposes of this disclosure, collocated multi-user communication devices refer to two devices that share a physical environment and an XR environment, such that the users of the collocated devices may experience the same physical objects and XR objects.

For purposes of this disclosure, a remote multi-user communication device refers to a secondary device that is located in a separate physical environment from a current, local multi-user communication device. In one or more embodiments, the remote multi-user communication device may be a participant in the XR session.

For purposes of this disclosure, shared virtual elements refer to XR objects that are visible or otherwise able to be experienced by participants in a common XR session.

In the following description, for purposes of explanation, numerous specific details are set forth in order to provide a thorough understanding of the disclosed concepts. As part of this description, some of this disclosure's drawings represent structures and devices in block diagram form in order to avoid obscuring the novel aspects of the disclosed concepts. In the interest of clarity, not all features of an actual implementation may be described. Further, as part of this description, some of this disclosure's drawings may be provided in the form of flowcharts. The boxes in any particular flowchart may be presented in a particular order. It should be understood however that the particular sequence of any given flowchart is used only to exemplify one embodiment. In other embodiments, any of the various elements depicted in the flowchart may be deleted, or the illustrated sequence of operations may be performed in a different order, or even concurrently. In addition, other embodiments may include additional steps not depicted as part of the flowchart. Moreover, the language used in this disclosure has been principally selected for readability and instructional purposes, and may not have been selected to delineate or circumscribe the inventive subject matter, resort to the claims being necessary to determine such inventive subject matter. Reference in this disclosure to "one embodiment" or to "an embodiment" means that a particular feature, structure, or characteristic described in connection with the embodiment is included in at least one embodiment of the disclosed subject matter, and multiple references to "one embodiment" or "an embodiment" should not be understood as necessarily all referring to the same embodiment.

It will be appreciated that in the development of any actual implementation (as in any software and/or hardware development project), numerous decisions must be made to achieve a developers' specific goals (e.g., compliance with system- and business-related constraints), and that these goals may vary from one implementation to another. It will also be appreciated that such development efforts might be complex and time-consuming, but would nevertheless be a routine undertaking for those of ordinary skill in the design and implementation of graphics modeling systems having the benefit of this disclosure.

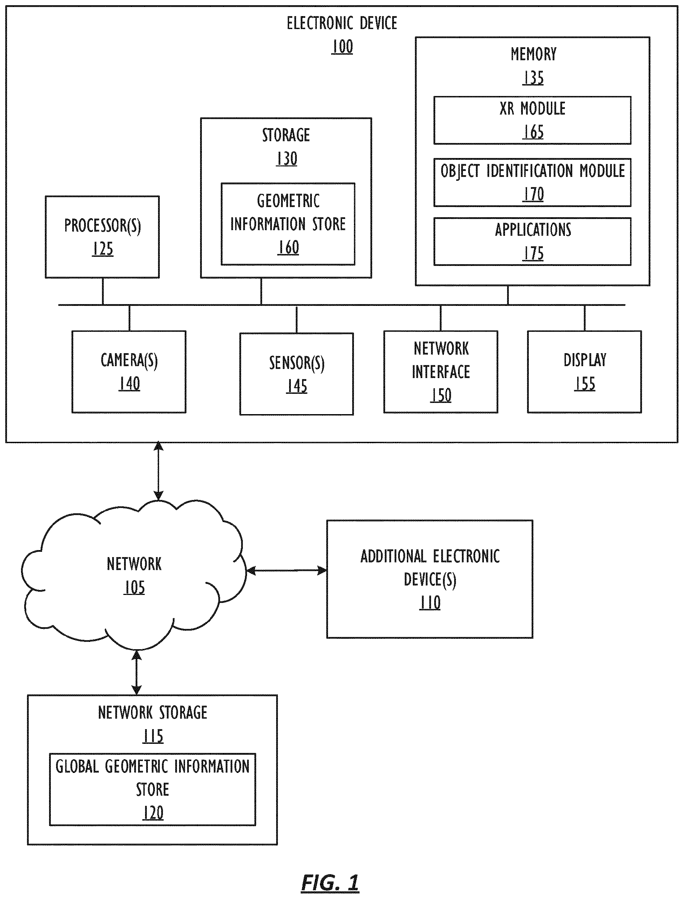

Referring to FIG. **1****,** a simplified block diagram of an electronic device **100** is depicted, communicably connected to additional electronic devices **110** and a network storage **115** over a network **105,** in accordance with one or more embodiments of the disclosure. Electronic device **100** may be part of a multifunctional device, such as a mobile phone, tablet computer, personal digital assistant, portable music/video player, wearable device, head-mounted systems, projection-based systems, base station, laptop computer, desktop computer, network device, or any other electronic systems such as those described herein. Electronic device **100,** additional electronic device **110,** and/or network storage **115** may additionally, or alternatively, include one or more additional devices within which the various functionality may be contained, or across which the various functionality may be distributed, such as server devices, base stations, accessory devices, and the like. Illustrative networks, such as network **105** include, but are not limited to, a local network such as a universal serial bus (USB) network, an organization's local area network, and a wide area network such as the Internet. According to one or more embodiments, electronic device **100** is utilized to participate in an XR multi-user session. It should be understood that the various components and functionality within electronic device **100,** additional electronic device **110** and network storage **115** may be differently distributed across the devices, or may be distributed across additional devices.

Electronic Device **100** may include one or more processors **125,** such as a central processing unit (CPU). Processor(s) **125** may include a system-on-chip such as those found in mobile devices and include one or more dedicated graphics processing units (GPUs). Further, processor(s) **125** may include multiple processors of the same or different type. Electronic device **100** may also include a memory **135.** Memory **135** may include one or more different types of memory, which may be used for performing device functions in conjunction with processor(s) **125.** For example, memory **135** may include cache, ROM, RAM, or any kind of transitory or non-transitory computer readable storage medium capable of storing computer readable code. Memory **135** may store various programming modules for execution by processor(s) **125,** including XR module **165,** object identification module **170,** and other various applications **175.** Electronic device **100** may also include storage **130.** Storage **130** may include one more non-transitory computer-readable mediums including, for example, magnetic disks (fixed, floppy, and removable) and tape, optical media such as CD-ROMs and digital video disks (DVDs), and semiconductor memory devices such as Electrically Programmable Read-Only Memory (EPROM), and Electrically Erasable Programmable Read-Only Memory (EEPROM). Storage **130** may be configured to store state tracking data **160,** according to one or more embodiments.

Electronic device **100** may also include one or more cameras **140** or other sensors **145,** such as depth sensor, from which depth of a scene may be determined. In one or more embodiments, each of the one or more cameras **140** may be a traditional RGB camera, or a depth camera. Further, cameras **140** may include a stereo- or other multi-camera system, a time-of-flight camera system, or the like. Electronic device **100** may also include a display **155.** The display device **155** may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In one embodiment, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

Storage **130** may be utilized to store various data and structures which may be utilized for providing state information in order to track an application and system state. Storage **130** may include, for example, geometric information store **160.** Geometric information store **160** may be utilized to store geometric information for a physical environment of electronic device **100** or a particular physical environment in which electronic device **100** is used for multi-user communication sessions. In one or more embodiments, geometric data may include a depth map, a blueprint layout, images, semantic information regarding horizontal and vertical surfaces, identified objects, and the like for a physical environment which may be utilized by XR module **165** to generate an environmental representation of a multi-user communication session. In one or more embodiments, geometric information may be stored occasionally, periodically, or in response to a trigger, such as initialization of a multi-user communication session or a request from another module or device. In one or more embodiments, the geometric information may be stored locally at each system, such as electronic device **100** and additional electronic devices **110,** and/or the geometric information may be stored in global geometric information store **120** as part of network storage **115.** In some embodiments, the global geometric information store **120** comprises centralized information regarding shared boundaries, orientation, and height of objects in the physical environments for multiple remote multi-user communication devices, rather than complete room scans for each physical environment in order to protect the privacy of the respective users of the remote multi-user communication devices.

According to one or more embodiments, memory **135** may include one or more modules that comprise computer readable code executable by the processor(s) **125** to perform functions. The memory may include, for example an appearance XR module **165** which may be used to provide a multi-user communication session in an XR environment. The multi-user communication session XR environment may be a computing environment which supports a shared experience by electronic device **100** as well as additional electronic devices **110** within a multi-user communication session.

Although electronic device **100** is depicted as comprising the numerous components described above, in one or more embodiments, the various components may be distributed across multiple devices. Accordingly, although certain calls and transmissions are described herein with respect to the particular systems as depicted, in one or more embodiments, the various calls and transmissions may be made differently directed based on the differently distributed functionality. Further, additional components may be used, some combination of the functionality of any of the components may be combined.

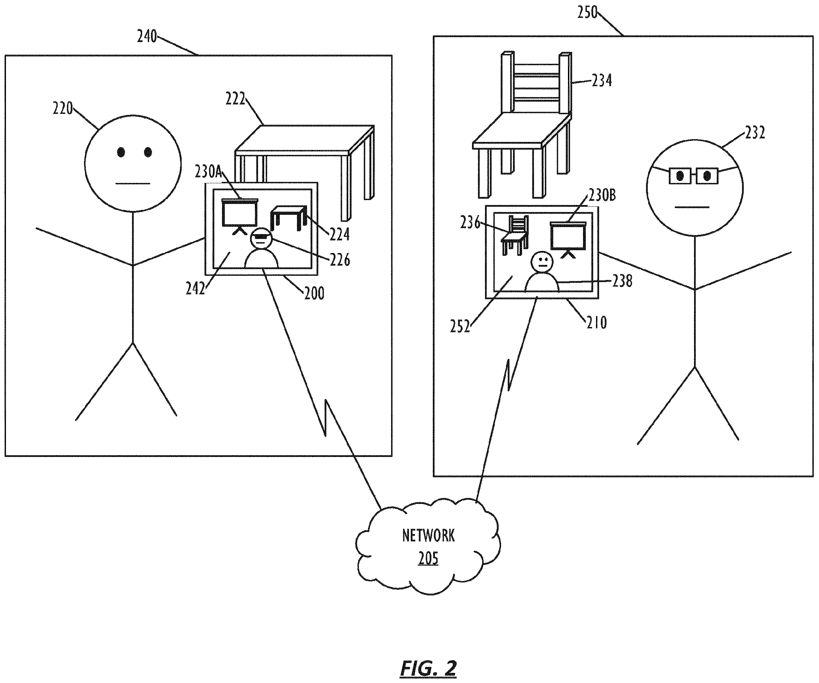

FIG. **2** shows a diagram of example operating environments, according to one or more embodiments. While pertinent features are shown, those of ordinary skill in the art will appreciate from the present disclosure that various other features have not been illustrated for the sake of brevity and so as not to obscure more pertinent aspects of the example among implementations disclosed herein. To that end, as a nonlimiting example, the operating environment **240** includes a first physical environment, whereas operating environment **250** includes a second physical environment.

As shown in FIG. **2****,** the first environment **240** includes a first user **220** that is utilizing a first electronic device **200,** and the second environment **250** includes a second user **232** that is utilizing a second electronic device **210.** In one or more embodiments, the first electronic device **200** and the second electronic device **210** include mobile devices, such as handheld devices, wearable devices, and the like.

In one or more embodiments the first electronic device **200** and the second electronic device **210** communicate with each other via a network **205.** Examples of network **205** may include, for example, the Internet, a wide area network (WAN), a local area network (LAN), etc. In one or more embodiments, the first electronic device **200** and the second electronic device **210** may be participating in a common multi-user XR environment.

Although electronic device **200** and electronic device **210** may be participating in a common multi-user communication session environment, the virtual environment may be rendered differently on each device. As shown, the electronic device **200** may depict physical objects of the environment **240.** As shown, physical table **222** may be depicted on the display **242** as a virtual table **224.** In one or more embodiments, the display **242** may be a see-through display, and virtual table **224** may simply be a view of physical table **222** through display **242.**

Display **242** of electronic device **200** may also include an avatar **226** corresponding to user **232** in physical environment **250.** For purposes of this disclosure, and avatar may include a virtual representation of a user. The avatar may depict real-time actions of the corresponding user **232,** including movement, updated location, and/or interactions with various physical components and/or virtual components within the multi-user communication session XR environment. An avatar may or may not mimic physical characteristics of the user, and may or may not mimic facial expressions of the user.

According to one or more embodiments, a multi-user XR environment may support one or more multi-user applications or other modules which allow for depictions of virtual objects across all participating devices, such as electronic device **200** and electronic device **210.** As shown in display **242,** presentation panel **230A** is an example of a virtual object which may be visible to all participating devices.

As an example, returning to environment **250,** electronic device **210** includes a display **252,** on which the presentation panel virtual object **230B** is depicted. It should be understood that in one or more embodiments, although the same virtual object may be visible across all participating devices, the virtual object may be rendered differently according to the location of the electronic device, the orientation of the electronic device, or other physical or virtual characteristics associated with electronic devices **200** and **210** and/or the multi-user XR environment depicted within displays **242** and **252.**

Returning to environment **250,** another characteristic of multi-user XR environment is that while virtual objects may be shared across participating devices, physical worlds may appear different. As such, physical chair **234** is depicted as virtual chair **236.** As described above, and one or more embodiments, display **252** may be a see-through display, and virtual chair **236** may be a view of physical chair **234** through the see-through display **252.** In addition, electronic device **210** depicts an avatar **238** corresponding to user **220** within physical environment **240.**

According to one or more embodiments, the virtual objects, such as presentation panel **230,** may be rendered as part of an application. In one or more embodiments, multiple applications may be executed within the copresence XR environment depicted in **242** and **252.**

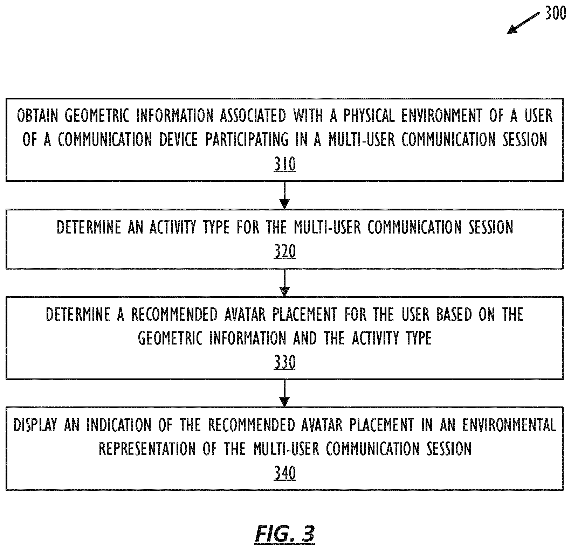

FIG. **3** shows, in flow chart form, an example method **300** for improving recommended avatar placement in an XR environment, according to one or more embodiments. For purposes of explanation, the following steps will be described in the context of FIGS. **1** and **2****.** However, it should be understood that the various actions may be taken by alternate components. In addition, the various actions may be performed in a different order. Further, some actions may be performed simultaneously, and some may not be required, or others may be added, according to various embodiments. The various actions may be performed remotely by a server device, by a single electronic device, and/or distributed between multiple electronic devices.

The flow chart begins at **310,** where XR module **165** obtains geometric information associated with a physical environment of a user of a communication device participating in a multi-user communication session such as the physical environment **240** of user **220** in which communication device **200** is active. The geometric information may comprise a blueprint-like layout of the physical environment; semantic information regarding horizontal and vertical surfaces in the physical environment such as floor, walls, tabletops, and the like; depth information from cameras **140;** a point cloud representation of the physical environment; and the like. In some embodiments, XR module **165** obtains the geometric information from geometric information store **160.** As an example, the geometric information for a particular room may be prestored and retrieved from storage. For example, a determination may be made as to a physical environment in which the device is active, such as by visual identification, localization data, or the like. The determined physical environment may be used to reference predetermined geometric information for the physical environment.

In some embodiments, XR module **165** causes cameras **140** to capture an image of the physical environment **240** such as by powering on cameras **140** or switching cameras **140** from a low power mode to a high power mode. XR module **165** may then perform image processing such as using a machine learning algorithm or object detection algorithms to identify objects such as table **222** in the physical environment **240.** In some embodiments, object identification module **170** may identify the objects in the image of the physical environment and provide information regarding the identified objects to XR module **165** and/or geometric information store **160.**

The flow chart continues at **320,** where the XR module **165** determines an activity type for the multi-user communication session. For example, in FIG. **2** the activity type for the multi-user communication session is a movie-watching or shared viewing activity centered around presentation panel **230** on which the movie or common video stream is shown. In another example, an activity type for the multi-user communication session may be a board game type, such as chess or checkers. At **330,** XR module **165** determines a recommended avatar placement for the user based on the geometric information and the activity type. In some embodiments, the geometric information may include identified objects in the physical environment **240** including table **222.** For example, the activity type for the multi-user communication session described in FIG. **2** is a presentation activity centered around presentation panel **230.** XR module **165** may determine a recommended avatar placement for the user such that the user has an appropriate viewing angle and viewing distance from a space for the presentation panel **230.** In another example, the activity type for the multi-user communication session may be a boardgame like chess. XR module **165** may determine a recommended avatar placement for the user such that the user can participate in the boardgame activity and interact with avatars for other users participating in the multi-user communication session. XR module **165** may also determine a recommended avatar placement for the user such that the avatar does not occlude the view of a shared content item by another user participating in the multi-user communication session, or intersect with another user avatar or objects in another user's environmental representation of the multi-user communication session. XR module **165** may also determine a recommended avatar placement for the user such that the avatar is an appropriate distance from a shared content item and/or from other user avatars, such that each user avatar has "personal space." XR module **165** may also determine a recommended avatar placement for the user such that the avatar may interact more naturally with shared content items and other users participating in the multi-user communication session. For example in a multi-user communication session in which two participants plan to watch a movie together, XR module **165** may determine recommended avatar placements such that the avatars appear to be sitting next to each other on a couch.

At **340,** XR module **165** displays an indication of the recommended avatar placement in an environmental representation of the multi-user communication session. In some embodiments, the environmental representation comprises a virtual environment. In other embodiments, the environmental representation comprises a mixed reality environment based on a view of the physical environment, such as the view through see-through display **242.** The indication of the recommended avatar placement may be an avatar outline at the recommended avatar placement in the environmental representation, a marker, a glowing indicator, or the like.

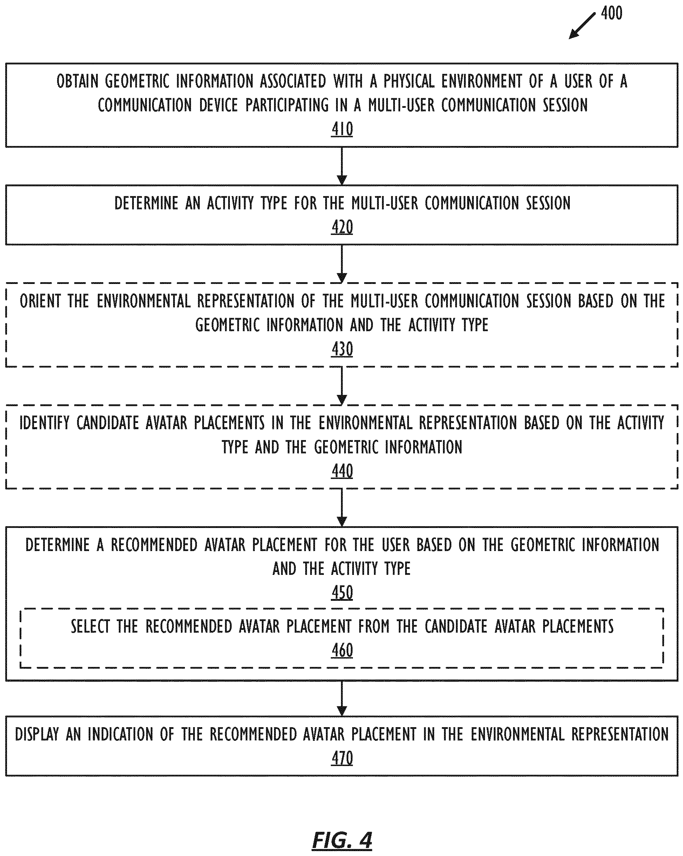

FIG. **4** shows, in flow chart form, a further example method **400** for improving recommended avatar placement in an XR environment including identifying candidate avatar placements, according to one or more embodiments. In one or more embodiments, certain actions take place as part of determining a recommended avatar placement. Still other actions comprise additional functionality. However, the various actions may take place in other locations within the flow chart of FIG. **4****.** For purposes of explanation, the following steps will be described in the context of FIGS. **1** and **2****.** However, it should be understood that the various actions may be taken by alternate components. In addition, the various actions may be performed in a different order. Further, some actions may be performed simultaneously, and some may not be required, or other may be added. The various actions may be performed remotely by a server device, by a single electronic device, and/or distributed between multiple electronic devices.

The flow chart begins at **410** and XR module **165** obtains geometric information associated with a physical environment of a user of a communication device participating in a multi-user communication session such as the physical environment **240** of user **220** of communication device **200** (e.g., in a manner similar or identical to **310** described above). As discussed previously herein with respect to FIG. **3****,** the geometric information may comprise a blueprint-like layout; semantic information regarding horizontal and vertical surfaces; depth information from cameras **140;** point cloud; and the like. At **420,** XR module **165** determines an activity type for the multi-user communication session, such as a presentation activity or a boardgame (e.g., in a manner similar or identical to **320** described above).

At **430,** XR module **165** optionally orients the environmental representation of the multi-user communication session based on the geometric information and the activity type. For example, an activity type for the multi-user communication session may be a meeting with six participants, and XR module **165** may orient the environmental representation of the multi-user communication session such that a meeting table virtual object in the environmental representation is oriented to provide a natural experience for the largest number of users possible or to promote natural interactions between the user avatars and shared content items.

At **440,** XR module **165** optionally identifies candidate avatar placements in the environmental representation based on the activity type and the geometric information. Returning to the example multi-user communication session for a meeting with six participants, each user may be in a conference room remote from the other users in the multi-user communication session. XR module **165** may identify each seat in the particular user's conference room as candidate avatar placements in the environmental representation of the multi-user communication session. Candidate avatar placements may be candidate placements for an avatar corresponding to the particular user and/or for avatars corresponding to other participants in the multi-user communication session. Candidate avatar placements may include placements in the XR environmental representation that facilitate interaction between the participant user avatars and shared content items; that do not interfere with objects in the user's physical environment or with objects in the physical environments of other users participating in the multi-user communication session; that offer appropriate viewing angles and distances from other user avatars and shared content items; and the like.

At **450,** XR module **165** determines a recommended avatar placement for the user (e.g., in a manner similar or identical to **330** described above), which may optionally further comprise step **460.** At **460,** XR module **165** selects the recommended avatar placement from the candidate avatar placements identified in step **440.** For example, XR module **165** may select a particular candidate avatar placement that provides a natural experience for the most number of users in the multi-user communication session or promotes natural interactions between the most number of users in the multi-user communication session. At **470,** XR module **165** displays an indication of the recommended avatar placement in an environmental representation of the multi-user communication session for the user (e.g., in a manner similar or identical to **340** described above). As discussed previously herein with reference to FIG. **3****,** the indication of the recommended avatar placement may be an avatar outline at the recommended avatar placement in the environmental representation, a marker, a glowing indicator, or the like.

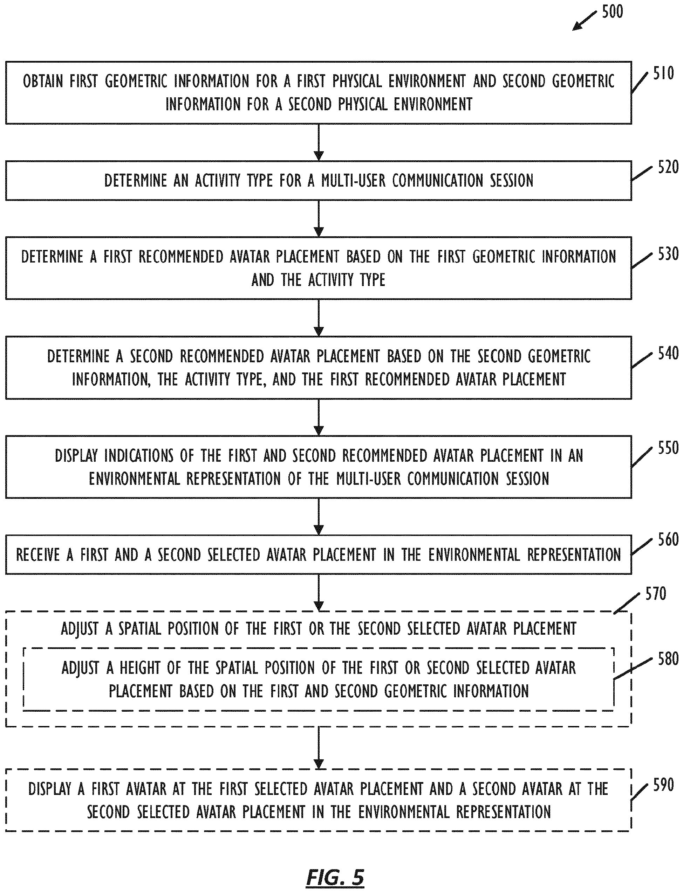

FIG. **5** shows, in flow chart form, a further example method **500** for improving recommended avatar placement in an XR environment including recommending avatar placement for multiple avatars and adjusting a spatial position of one or more of the selected avatar placements, according to one or more embodiments. In one or more embodiments, certain actions take place as part of adjusting a spatial position of a selected avatar placement in the environmental representation. Still other actions comprise additional functionality. However, the various actions may take place in other locations within the flow chart of FIG. **5****.** For purposes of explanation, the following steps will be described in the context of FIGS. **1** and **2****.** However, it should be understood that the various actions may be taken by alternate components. In addition, the various actions may be performed in a different order. Further, some actions may be performed simultaneously, and some may not be required, or other may be added. The various actions may be performed remotely by a server device, by a single electronic device, and/or distributed between multiple electronic devices.

The flow chart begins at **510** and XR module **165** obtains a first geometric information associated with a first physical environment of a first user of a first communication device participating in a multi-user communication session and a second geometric information associated with a second physical environment of a second user of a second communication device participating in the multi-user communication session. For example, the first geometric information may include geometric information about the first physical environment **240** for user **220** of electronic device **200,** and the second geometric information may include geometric information about the second physical environment **250** for user **232** of electronic device **210.** In some examples, the first geometric information can be obtained in a manner similar or identical to **310** described above, and the second geometric information can be obtained by the second communication device in a manner similar or identical to **310** described above. In some examples, the second communication device shares the second geometric information with the first communication device. In other examples, the second communication device provides the second geometric information to global geometric information store **120** and the first communication device obtains the second geometric information from the global geometric information store **120.** At **520,** XR module **165** determines an activity type for the multi-user communication session, such as a movie-watching activity or a boardgame (e.g., in a manner similar or identical to **320** described above).

At **530,** XR module **165** determines a first recommended avatar placement for the first user based on the first geometric information and the activity type (e.g., in a manner similar or identical to **330** described above). At **540,** XR module **165** determines a second recommended avatar placement based on the second geometric information, the activity type, and the first recommended avatar placement. Returning to the example multi-user communication session for a meeting with six participants in remote conference rooms, XR module **165** may determine a first recommended avatar placement for a first user and a second recommended avatar placement for a second user such that the second recommended avatar placement does not overlap with the first recommended avatar placement. XR module **165** may continue on to determine recommended avatar placements for the remaining four participants such that none of the recommended avatar placements overlap and the six user avatars would appear to be seated around a conference table. In another example multi-user communication session in which two remote participants plan watch a movie, XR module **165** may determine a first recommended avatar placement for a first user at a left side of a couch in the first physical environment and a second recommended avatar placement for a second user at a right side of a couch in the second physical environment. In the rendered XR environmental representations of the multi-user communication session, the avatar of the first user appears to be sitting to the left of the second user in the second user's XR environmental representation, and the avatar of the second user appears to be sitting to the right of the first user in the first user's XR environmental representation.

At **550,** XR module **165** displays indications of the first recommended avatar placement and the second recommended avatar placement in an environmental representation of the multi-user communication session. For example, as discussed previously herein with reference to FIG. **3****,** the indication of the first recommended avatar placement may be an avatar outline at the first recommended avatar placement in the environmental representation, a marker, a glowing indicator, or the like. The indication of the second recommended avatar placement may be contrasting from the indication of the first recommended avatar placement in the environmental representation of the multi-user communication session for the first user. For example, the avatar outline for the second recommended avatar placement may be grayed out compared to the avatar outline for the first recommended avatar placement. Conversely, in the environmental representation of the multi-user communication session for the second user, the avatar outline of the first recommended avatar placement may be grayed out compared to the avatar outline for the second recommended avatar placement. At **560,** XR module **165** receives a first and second selected avatar placement. For example, the first electronic device may receive a user input from the first user selecting the indication of the first recommended avatar placement, and the second electronic device may receive a user input from the second user selecting the indication of the second recommended avatar placement. In some examples, the second electronic device provides the second selected avatar placement to the first electronic device. In other examples, the second electronic device provides the second selected avatar placement to network storage **115,** and the first electronic device obtains the second selected avatar placement from network storage **115.** In some embodiments in which the first user is a host for the multi-user communication session or otherwise a spatial authority for the XR representation of the multi-user communication session, the first electronic device receives a second user input from the first user selecting an avatar placement for the second user. After the first user selects an avatar placement for the second user, the environmental representation for the second user presents the avatar corresponding to the second user at the second selected avatar placement. If the second user is not in the second selected avatar placement, the second environmental representation may present a request to the second user to move to the second selected avatar placement and gray out the second environmental representation of the multi-user communication session until the second user moves to the second selected avatar placement.

At **570,** XR module **165** adjusts a spatial position of the first selected avatar placement or the second selected avatar placement in the environmental representation. The spatial position may be adjusted such that the user avatars at the first and second selected avatar placements appear naturally to the two users. Adjusting the spatial position of the first or second selected avatar placement may optionally comprise step **580,** at which XR module **165** adjusts a height of the spatial position of the first or second selected avatar placement based on the first and second geometric information. For example in the movie-watching multi-user communication session, XR module **165** may normalize a height of the first or second selected avatar placement such that both the first and second avatars appear to be seated at the same height on the couch when displayed at step **590,** rather than floating slightly above the couch or sitting slightly inside the couch cushions.

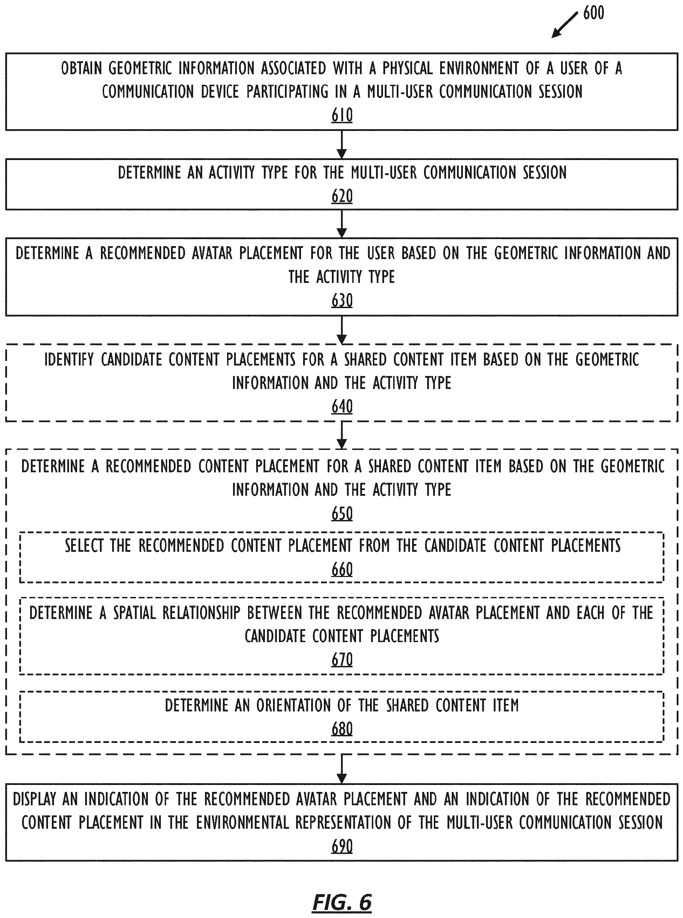

FIG. **6** shows, in flow chart form, an example process **600** for improving presentation of an XR environment including recommending content placement, according to one or more embodiments. In one or more embodiments, certain actions take place as part of determining a recommended content placement. Still other actions comprise additional functionality. However, the various actions may take place in other locations within the flow chart of FIG. **6****.** For purposes of explanation, the following steps will be described in the context of FIGS. **1** and **2****.** However, it should be understood that the various actions may be taken by alternate components. In addition, the various actions may be performed in a different order. Further, some actions may be performed simultaneously, and some may not be required, or other may be added. The various actions may be performed remotely by a server device, by a single electronic device, and/or distributed between multiple electronic devices.

The flow chart begins at **610** and XR module **165** obtains geometric information associated with a physical environment of a user of a communication device participating in a multi-user communication session such as the physical environment **240** of user **220** of communication device **200** (e.g., in a manner similar or identical to **310** described above). At **620,** XR module **165** determines an activity type for the multi-user communication session, such as a presentation activity or a boardgame (e.g., in a manner similar or identical to **320** described above). At **630,** XR module **165** determines a recommended avatar placement for the user based on the geometric information and the activity type (e.g., in a manner similar or identical to **330** described above). For example, XR module **165** may determine a recommended avatar placement as described in methods **300** and **400.**

At **640,** XR module **165** may optionally identify candidate content placements for a shared content item in the multi-user communication session based on the geometric information and the activity type. Candidate content placements may include placements in the XR environmental representation of the multi-user communication session that facilitate interactions between the user avatars and shared content items intended to be interacted with frequently, such as a game board and game pieces; that discourage accidental interactions between the user avatars and shared content items intended to be interacted with infrequently, such as a presentation panel on which a movie is shown; that do not interfere with objects in the user's physical environment or with objects in the physical environments of other users participating in the multi-user communication session; that offer appropriate viewing angles and distances from user avatars, recommended placements for user avatars, other shared content items, and recommended placements for other shared content items; and the like. At **650,** XR module **165** may optionally determine a recommended content placement for the shared content item based on the geometric information and the activity type. Determining the recommended content placement may optionally comprise steps **660, 670,** and/or **680.** In embodiments in which XR module **165** identifies candidate content placements in step **640,** at step **660** XR module **165** may select the recommended content placement from the candidate content placements. For example, XR module **165** may review the set of candidate content placements determined at step **640** to select a particular candidate content placement as the recommended content placement. Instead of or in addition to step **660,** at step **670** XR module **165** may determine a spatial relationship between the recommended avatar placement and each of the candidate content placements determined at step **640.** For example, XR module **165** may determine a viewing distance, viewing angle, or the like between the recommended avatar placement and a particular candidate content placement. If the spatial relationship between the recommended avatar placement and the particular candidate content placement is inappropriate for a presentation size of the particular content item, XR module **165** continues to another candidate content placement and so on until the spatial relationship between the recommended avatar placement and the particular candidate content placement is appropriate for the presentation size.

At **680,** XR module **165** may optionally determine an orientation of the shared content item. For example, in FIG. **2** the activity type for the multi-user communication session is a presentation activity centered around presentation panel **230.** Presentation panel **230** is a vertically oriented shared content item, such that XR module **165** determines a recommended content placement for presentation panel **230** on a wall or other vertical surface in the environmental representation of the multi-user communication session. In another example, an activity type for the multi-user communication session may be a boardgame. The game board is a horizontally oriented shared content item, such that XR module **165** determines a recommended content placement for the game board on a table or other flat horizontal open space in the environmental representation of the multi-user communication session. At **690,** XR module **165** displays an indication of the recommended avatar placement and an indication of the recommended content placement in the environmental representation of the multi-user communication session. As discussed previously herein with reference to FIG. **3****,** the indication of the recommended avatar placement may be an avatar outline at the recommended avatar placement in the environmental representation, a marker, a glowing indicator, or the like. The indication of the recommended content placement may be an outline of the shared content item at the recommended content placement in the environmental representation, a marker, a glowing indicator, or the like.

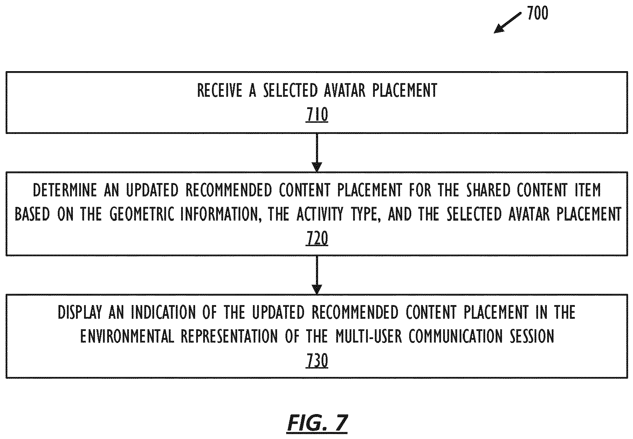

FIG. **7** shows, in flow chart form, a further example process **700** for updating a recommended content placement based on a selected avatar placement, according to one or more embodiments. For purposes of explanation, the following steps will be described in the context of FIGS. **1****,** **2****,** and **6****.** However, it should be understood that the various actions may be taken by alternate components. In addition, the various actions may be performed in a different order. Further, some actions may be performed simultaneously, and some may not be required, or other may be added. The various actions may be performed remotely by a server device, by a single electronic device, and/or distributed between multiple electronic devices.

In some examples, process **700** may be performed after process **600** is performed and indications of the recommended avatar placement and the recommended content placement are displayed in the environmental representation of the multi-user communication session. At **710,** XR module **165** receives a selected avatar placement for the environmental representation of the multi-user communication session (e.g., in a manner similar or identical to **540** described above with respect to the first and second selected avatar placements). At **720,** XR module **165** determines an updated recommended content placement for the shared content item based on the geometric information, the activity type, and the selected avatar placement. For example, XR module **165** may determine a spatial relationship between the recommended content placement determined at step **650** and the selected avatar placement. In response to the spatial relationship indicating an inappropriate viewing angle, viewing distance, or the like, XR module **165** may select the updated content placement from the set of candidate content placements optionally determined at step **640.** At **730,** XR module **165** displays an indication of the updated recommended content placement in the environmental representation of the multi-user communication session. The indication of the updated recommended content placement may be contrasting with the indication of the recommended content placement displayed at step **690.** For example, the indication of the updated recommended content placement may flash briefly to indicate a change in the recommended content placement and the indication of the recommended content placement displayed at step **690** may be removed from the environmental representation.

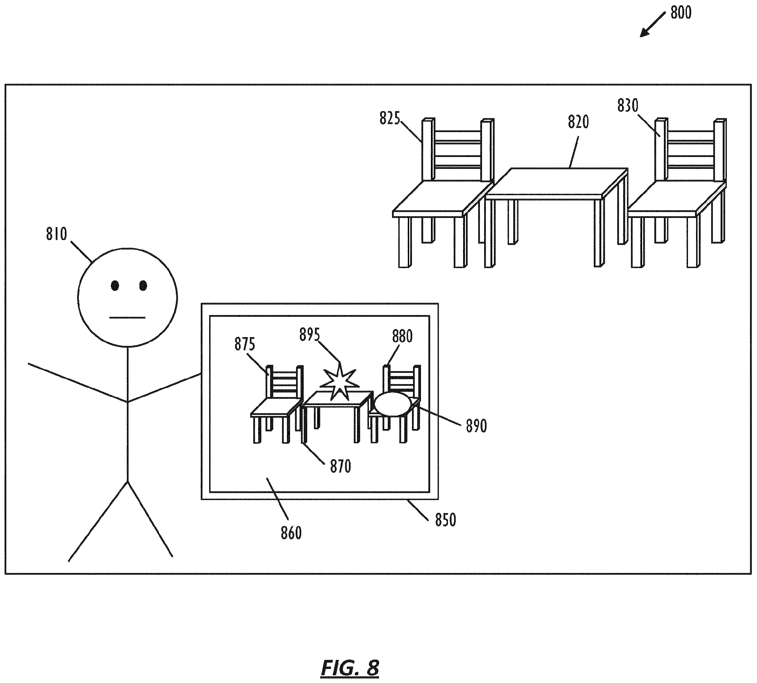

FIG. **8** shows a diagram of an example operating environment and environmental representation of a multi-user communication session, according to one or more embodiments. While pertinent features are shown, those of ordinary skill in the art will appreciate from the present disclosure that various other features have not been illustrated for the sake of brevity and so as not to obscure more pertinent aspects of the example among implementations disclosed herein. The physical environment **800** includes a user **810,** a table **820,** and two chairs **825** and **830.** User **810** is utilizing an electronic device **850,** which may be a handheld device, wearable device, and the like. In one or more embodiments, the electronic device **850** may be participating in a multi-user communication session.

The environmental representation **860** of the multi-user communication session displayed on electronic device **850** may depict physical objects of the environment **800.** As shown, physical table **820** may be depicted in the environmental representation **860** as a virtual table **870.** Physical chairs **825** and **830** maybe depicted in the environmental representation **860** as virtual chairs **875** and **880.** In one or more embodiments, the display of electronic device **850** may be a see-through display, and virtual table **870** and virtual chairs **875** and **880** may simply be a view of physical table **820** and physical chairs **825** and **830** through the see-through display.

The environmental representation **860** of the multi-user communication session shown on the display of electronic device **850** may also include an indication of the recommended avatar placement **890** on virtual chair **880** and an indication of the recommended content placement **895** on virtual table **870.** The recommended avatar placement may be determined by the methods **300** and **400** described in FIGS. **3** and **4****,** respectively. The recommended content placement may be determined by the process **600** described in FIG. **6****.** According to one or more embodiments, the virtual objects, avatars, and shared content items to be placed in the environmental representation **860** may be rendered as part of one or more applications executed with the multi-user communication session.

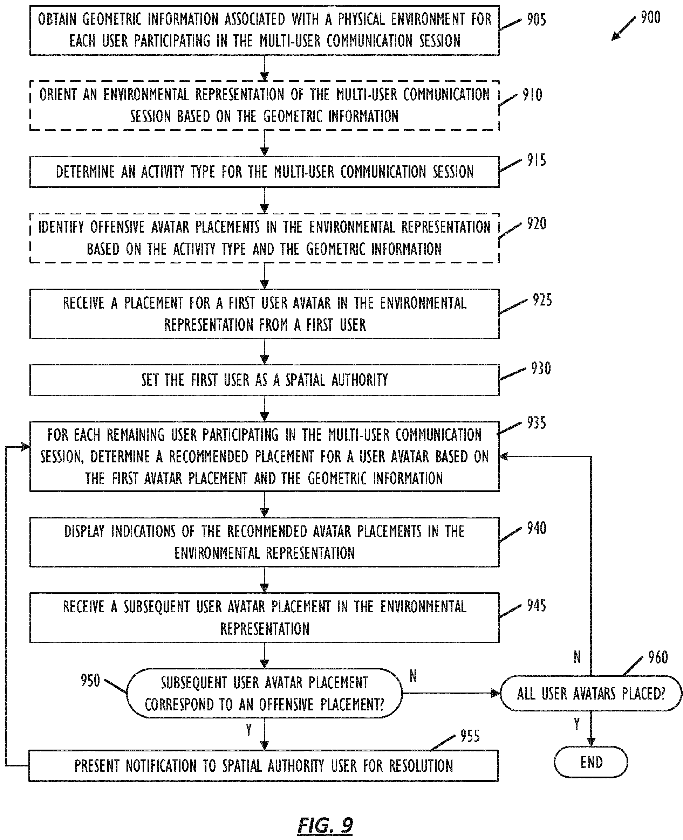

FIG. **9** shows, in flow chart form, an example process **900** for resolving avatar placements for multiple users in a multi-user communication session, according to one or more embodiments. The various actions may take place in other locations within the flow chart of FIG. **9****.** For purposes of explanation, the following steps will be described in the context of FIGS. **1** and **2****.** However, it should be understood that the various actions may be taken by alternate components. In addition, the various actions may be performed in a different order. Further, some actions may be performed simultaneously, and some may not be required, or other may be added. The various actions may be performed remotely by a server device, by a single electronic device, and/or distributed between multiple electronic devices.

The flow chart begins at **905** and XR module **165** obtains geometric information associated with a physical environment for each user participating in the multi-user communication session (e.g., in a manner similar or identical to **510** described above with respect to the first and second physical environments). Returning to the example multi-user communication session for a meeting with six participants in remote conference rooms, XR module **165** obtains geometric information for each of the six remote conference rooms of the six participants. At **910,** XR module **165** may optionally orient an environmental representation of the multi-user communication session based on the geometric information. For example, XR module **165** may orient the environmental representation of the multi-user communication session such that a meeting table virtual object in the environmental representation is oriented to provide a natural experience for the largest number of users possible. At **915,** XR module **165** may determine an activity type for the multi-user communication session (e.g., in a manner similar or identical to **320** described above), such as a presentation activity for the six person meeting.

At **920,** XR module **165** may optionally identify offensive avatar placements in the environmental representation based on the activity type and the geometric information. Offensive avatar placements may include placements that cause the avatar to occlude the view of a shared content item by another user participating in the multi-user communication session; to intersect with another user avatar or objects in another user's environmental representation of the multi-user communication session; to be too close to a shared content item or to another user avatar, such that the avatar does not have "personal space"; and the like. For example, the geometric information for the six remote conference rooms may include information regarding furniture in the conference rooms, such as bookshelves, couches, and the like. XR module **165** may identify the furniture locations as offensive avatar placements in the environmental representation such that none of the avatars are placed inside furniture. At **925,** XR module **165** receives a placement for a first user avatar in the environmental representation (e.g., in a manner similar or identical to **560** described above). For example, the user may be a meeting host initiating the multi-user communication session for the six person meeting, and select an avatar placement first out of the six users. XR module **165** may set the first user as a spatial authority for the multi-user communication session, such that the first user is called upon to resolve any avatar placement conflicts and to confirm placement of any shared content items for the multi-user communication session.

At **935,** for each remaining user participating in the multi-user communication session, the XR module **165** may determine a recommended placement for a user avatar based on the first avatar placement and the geometric information. For example, the XR module **165** may recommend avatar placements that do not conflict with the first avatar placement or the offensive avatar placements optionally identified in step **920.** In the example multi-user communication session for a meeting with six participants in remote conference rooms, the XR module **165** may recommend avatar placements that do not place the avatars in the furniture such as bookshelves in any of the remote conference rooms and cause the avatars to appear to be seated around a conference table. At **940,** XR module **165** displays indications of the recommended avatar placements in the environmental representation of the multi-user communication session (e.g., in a manner similar or identical to **340** described above). In some examples, each user's environmental representation of the multi-user communication session may include the recommended avatar placements for every user. In other examples, each user's environmental representation may include only the recommended avatar placement corresponding to the particular user.

At **945,** XR module **165** may receive a subsequent user avatar placement in the environmental representation (e.g., in a manner similar or identical to **560** described above). At **950,** XR module **165** determines whether the subsequent user avatar placement corresponds to an offensive avatar placement identified in step **920.** If so, the XR module **165** presents a notification to the spatial authority user for resolution of the conflict at **955,** and returns to step **935,** to determine further recommended placements for each remaining user participating in the multi-user communication session. If the subsequent user avatar placement does not correspond to an offensive avatar placement, XR module **165** proceeds to step **960,** at which it determines whether user avatars for all the users participating in the multi-user communication session have been placed in the environmental representation. If all avatars have been placed, XR module **165** concludes process **900.** If not, XR module **165** returns to step **935** and determines further recommended placements for each remaining user participating in the multi-user communication session. In response to a subsequent user avatar placement that is not an offensive avatar placement but also not a recommended avatar placement, in some embodiments XR module **165** may present a notification to the spatial authority user for resolution. The spatial authority user may modify the spatial arrangement of avatars in the environmental representation to accommodate the subsequent user avatar placement, or may communicate with the user who selected the subsequent user avatar placement to change it. In other embodiments, XR module **165** may present a notification to the user who selected the subsequent user avatar placement to select an avatar placement from the recommended avatar placements instead. In some embodiments, XR module **165** may accept the subsequent user avatar placement that is not an offensive or a recommended avatar placement and update the recommended placements for the remaining user avatars at step **935.** Returning to the example multi-user communication session for a meeting with six participants in remote conference rooms, the remote conference rooms may each include a rectangular conference table with one seat at each of the head and foot of the table and two seats on each side of the table. In this example, the first user has selected a recommended avatar placement at the head of the table. A second user may select the head of the table as well, rather than the recommended avatar placements in the remaining seats along the sides and foot of the table. XR module **165** may present a notification to the first user to resolve the conflict, present a notification to the second user to select a recommended avatar placement, or adjust the environmental representations of the multi-user communication session such that the second user appears at the foot of the table, rather than the head of the table.

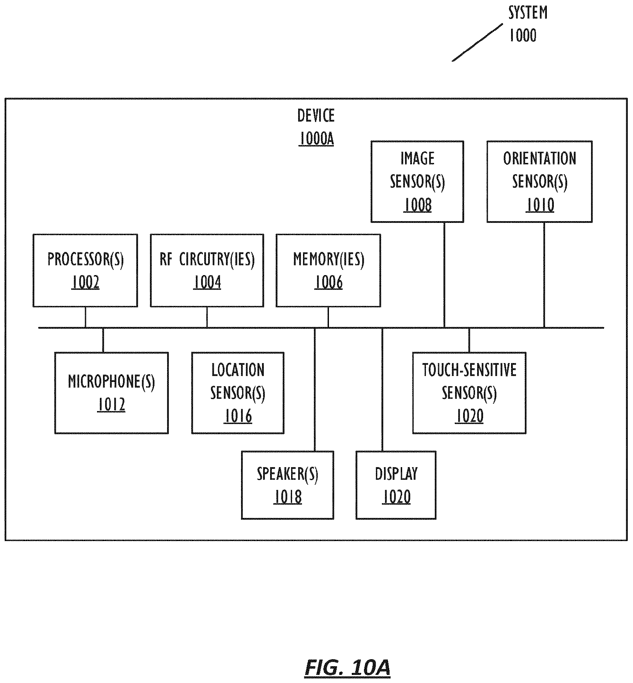

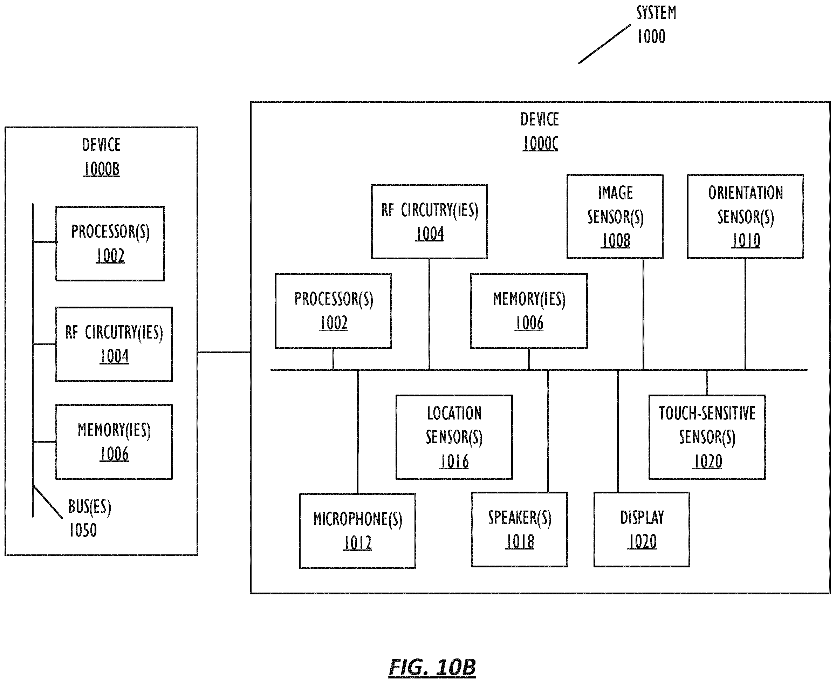

FIG. **10A** and FIG. **10B** depict exemplary system **1000** for use in various extended reality technologies.

In some examples, as illustrated in FIG. **10A****,** system **1000** includes device **1000a.** Device **1000a** includes various components, such as processor(s) **1002,** RF circuitry(ies) **1004,** memory(ies) **1006,** image sensor(s) **1008,** orientation sensor(s) **1010,** microphone(s) **1012,** location sensor(s) **1016,** speaker(s) **1018,** display(s) **1020,** and touch-sensitive surface(s) **1022.** These components optionally communicate over communication bus(es) **1050** of device **1000a.**

In some examples, elements of system **1000** are implemented in a base station device (e.g., a computing device, such as a remote server, mobile device, or laptop) and other elements of system **1000** are implemented in a second device (e.g., a head-mounted device). In some examples, device **1000a** is implemented in a base station device or a second device.

As illustrated in FIG. **10B****,** in some examples, system **1000** includes two (or more) devices in communication, such as through a wired connection or a wireless connection. First device **1000b** (e.g., a base station device) includes processor(s) **1002,** RF circuitry(ies) **1004,** and memory(ies) **1006.** These components optionally communicate over communication bus(es) **1050** of device **1000b.** Second device **1000c** (e.g., a head-mounted device) includes various components, such as processor(s) **1002,** RF circuitry(ies) **1004,** memory(ies) **1006,** image sensor(s) **1008,** orientation sensor(s) 1010, microphone(s) **1012,** location sensor(s) 1016, speaker(s) **1018,** display(s) **1020,** and touch-sensitive surface(s) **1022.** These components optionally communicate over communication bus(es) **1050** of device **1000c.**

System **1000** includes processor(s) **1002** and memory(ies) **1006.** Processor(s) **1002** include one or more general processors, one or more graphics processors, and/or one or more digital signal processors. In some examples, memory(ies) **1006** are one or more non-transitory computer-readable storage mediums (e.g., flash memory, random access memory) that store computer-readable instructions configured to be executed by processor(s) **1002** to perform the techniques described below.

System **1000** includes RF circuitry(ies) **1004.** RF circuitry(ies) 1004 optionally include circuitry for communicating with electronic devices, networks, such as the Internet, intranets, and/or a wireless network, such as cellular networks and wireless local area networks (LANs). RF circuitry(ies) **1004** optionally includes circuitry for communicating using near-field communication and/or short-range communication, such as Bluetooth^{®}.

System **1000** includes display(s) **1020.** Display(s) **1020** may have an opaque display. Display(s) **1020** may have a transparent or semi-transparent display that may incorporate a substrate through which light representative of images is directed to an individual's eyes. Display(s) **1020** may incorporate LEDs, OLEDs, a digital light projector, a laser scanning light source, liquid crystal on silicon, or any combination of these technologies. The substrate through which the light is transmitted may be a light waveguide, optical combiner, optical reflector, holographic substrate, or any combination of these substrates. In one example, the transparent or semi-transparent display may transition selectively between an opaque state and a transparent or semi-transparent state. Other examples of display(s) **1020** include heads up displays, automotive windshields with the ability to display graphics, windows with the ability to display graphics, lenses with the ability to display graphics, tablets, smartphones, and desktop or laptop computers. Alternatively, system **1000** may be designed to receive an external display (e.g., a smartphone). In some examples, system **1000** is a projection-based system that uses retinal projection to project images onto an individual's retina or projects virtual objects into a physical setting (e.g., onto a physical surface or as a holograph).

In some examples, system **1000** includes touch-sensitive surface(s) **1022** for receiving user inputs, such as tap inputs and swipe inputs. In some examples, display(s) **1020** and touch-sensitive surface(s) **1022** form touch-sensitive display(s).

System **1000** includes image sensor(s) **1008.** Image sensors(s) **1008** optionally include one or more visible light image sensor, such as charged coupled device (CCD) sensors, and/or complementary metal-oxide-semiconductor (CMOS) sensors operable to obtain images of physical elements from the physical setting. Image sensor(s) also optionally include one or more infrared (IR) sensor(s), such as a passive IR sensor or an active IR sensor, for detecting infrared light from the physical setting. For example, an active IR sensor includes an IR emitter, such as an IR dot emitter, for emitting infrared light into the physical setting. Image sensor(s) **1008** also optionally include one or more event camera(s) configured to capture movement of physical elements in the physical setting. Image sensor(s) **1008** also optionally include one or more depth sensor(s) configured to detect the distance of physical elements from system **1000.** In some examples, system **1000** uses CCD sensors, event cameras, and depth sensors in combination to detect the physical setting around system **1000.** In some examples, image sensor(s) **1008** include a first image sensor and a second image sensor. The first image sensor and the second image sensor are optionally configured to capture images of physical elements in the physical setting from two distinct perspectives. In some examples, system **1000** uses image sensor(s) **1008** to receive user inputs, such as hand gestures. In some examples, system **1000** uses image sensor(s) **1008** to detect the position and orientation of system **1000** and/or display(s) **1020** in the physical setting. For example, system **1000** uses image sensor(s) **1008** to track the position and orientation of display(s) **1020** relative to one or more fixed elements in the physical setting.

In some examples, system **1000** includes microphones(s) **1012.** System **1000** uses microphone(s) **1012** to detect sound from the user and/or the physical setting of the user. In some examples, microphone(s) **1012** includes an array of microphones (including a plurality of microphones) that optionally operate in tandem, such as to identify ambient noise or to locate the source of sound in space of the physical setting.

System **1000** includes orientation sensor(s) **1010** for detecting orientation and/or movement of system **1000** and/or display(s) **1020.** For example, system **1000** uses orientation sensor(s) **1010** to track changes in the position and/or orientation of system **1000** and/or display(s) **1020,** such as with respect to physical elements in the physical setting. Orientation sensor(s) **1010** optionally include one or more gyroscopes and/or one or more accelerometers.

The techniques defined herein consider the option of obtaining and utilizing a user's personal information. For example, such personal information may be utilized in order to provide a multi-user communication session on an electronic device. However, to the extent such personal information is collected, such information should be obtained with the user's informed consent, such that the user has knowledge of and control over the use of their personal information.

Parties having access to personal information will utilize the information only for legitimate and reasonable purposes, and will adhere to privacy policies and practices that are at least in accordance with appropriate laws and regulations. In addition, such policies are to be well-established, user-accessible, and recognized as meeting or exceeding governmental/industry standards. Moreover, the personal information will not be distributed, sold, or otherwise shared outside of any reasonable and legitimate purposes.

Users may, however, limit the degree to which such parties may obtain personal information. The processes and devices described herein may allow settings or other preferences to be altered such that users control access of their personal information. Furthermore, while some features defined herein are described in the context of using personal information, various aspects of these features can be implemented without the need to use such information. As an example, a user's personal information may be obscured or otherwise generalized such that the information does not identify the specific user from which the information was obtained.

It is to be understood that the above description is intended to be illustrative, and not restrictive. The material has been presented to enable any person skilled in the art to make and use the disclosed subject matter as claimed and is provided in the context of particular embodiments, variations of which will be readily apparent to those skilled in the art (*e*.*g*., some of the disclosed embodiments may be used in combination with each other). Accordingly, the specific arrangement of steps or actions shown in FIGS. **3-7** and 9 or the arrangement of elements shown in FIGS. **1****,** **2****,** **8****,** and **10** should not be construed as limiting the scope of the disclosed subject matter. The scope of the invention is defined by the appended claims. In the appended claims, the terms "including" and "in which" are used as the plain-English equivalents of the respective terms "comprising" and "wherein."

## Claims

1. A method, comprising:
obtaining (310) geometric information associated with a physical environment of a communication device (200) participating in a multi-user communication session;
**characterised by**
determining (320) an activity type for the multi-user communication session;
determining (330) a recommended avatar placement (890) based on the geometric information and the activity type; and
displaying (340) an indication of the recommended avatar placement (890) in an environmental representation (860) of the multi-user communication session.

2. The method of claim 1, further comprising identifying (440) candidate avatar placements in the environmental representation (860) based on the activity type and the geometric information, wherein determining the recommended avatar placement (890) comprises selecting (460) the recommended avatar placement (890) from the candidate avatar placements.

3. The method of claim 1, wherein the environmental representation (860) comprises a virtual environment or a mixed reality environment based on a view of the physical environment.

4. The method of claim 3, wherein the mixed reality environment comprises at least one virtual content item overlaid with the view of the physical environment.

5. The method of claim 1 wherein the geometric information comprises at least one of a blueprint for the physical environment, a three-dimensional representation of the physical environment, and semantic information regarding vertical and horizontal surfaces in the physical environment.

6. The method of claim 5, wherein determining the recommended avatar placement (890) is further based on the semantic information regarding horizontal surfaces in the physical environment.

7. The method of any of claims 1-6, wherein the indication of the recommended avatar placement (890) comprises at least one selected from an avatar outline at the recommended avatar placement (890) in the environmental representation (860) and a marker at the recommended avatar placement (890) in the environmental representation (860).

8. The method of any of claims 1-6, further comprising orienting (430) the environmental representation (860) based on the geometric information, wherein the recommended avatar placement (890) is further based on the orientation of the environmental representation (860).

9. The method of any of claims 1-8, further comprising:
obtaining geometric information associated with a second physical environment (250) of a second communication device (210) participating in the multi-user communication session;
determining a second recommended avatar placement based on the geometric information associated with the second physical environment (250), the activity type, and the recommended avatar placement (890); and
displaying an indication of the second recommended avatar placement in the environmental representation (860).

10. The method of claim 9, further comprising:
receiving a first selected avatar placement and a second selected avatar placement;
adjusting (570) a first spatial position of the first selected avatar placement or a second spatial position of the second selected avatar placement in the environmental representation (860); and
displaying (590) a first avatar at the first selected avatar placement and a second avatar at the second selected avatar placement in the environmental representation (860).

11. The method of claim 10, wherein adjusting the first spatial position or the second spatial position comprises adjusting (580) a height of the first selected avatar placement or a height of the second selected avatar placement in the environmental representation (860) based on the geometric information associated with the physical environment and the geometric information associated with the second physical environment (250).

12. The method of any of claims 1-11, further comprising:
determining (650) a recommended content placement (895) for a shared content item based on the geometric information and the activity type; and
displaying (690) an indication of the recommended content placement (895) for the shared content item in the environmental representation (860).

13. The method of claim 12, further comprising identifying (640) candidate content placements in the environmental representation (860) based on the geometric information and the activity type, wherein the recommended content placement (895) is selected (660) from the candidate content placements.

14. A non-transitory computer readable medium comprising computer code, executable by one or more processors to perform the method of any of claims 1-13.

15. A system (1000), comprising:
one or more processors; and
one or more computer readable media comprising computer readable code executable by the one or more processors to perform the method of any of claims 1-13.

## Patentansprüche

1. Verfahren, umfassend:
Erhalten (310) geometrischer Informationen, die einer physischen Umgebung einer Kommunikationsvorrichtung (200) zugeordnet sind, die an einer Mehrbenutzer-Kommunikationssitzung teilnimmt;
**gekennzeichnet durch**
Bestimmen (320) eines Aktivitätstyps für die Mehrbenutzer-Kommunikationssitzung;
Bestimmen (330) einer empfohlenen Avatar-Platzierung (890) basierend auf den geometrischen Informationen und dem Aktivitätstyp; und
Anzeigen (340) einer Angabe der empfohlenen Avatar-Platzierung (890) in einer Umgebungsdarstellung (860) der Mehrbenutzer-Kommunikationssitzung.

2. Verfahren nach Anspruch 1, ferner umfassend das Identifizieren (440) von Kandidaten-Avatar-Platzierungen in der Umgebungsdarstellung (860) basierend auf dem Aktivitätstyp und den geometrischen Informationen, wobei das Bestimmen der empfohlenen Avatar-Platzierung (890) das Auswählen (460) der empfohlenen Avatar-Platzierung (890) aus den Kandidaten-Avatar-Platzierungen umfasst.

3. Verfahren nach Anspruch 1, wobei die Umgebungsdarstellung (860) eine virtuelle Umgebung oder eine gemischte Realitätsumgebung basierend auf einer Ansicht der physischen Umgebung umfasst.

4. Verfahren nach Anspruch 3, wobei die gemischte Realitätsumgebung mindestens ein virtuelles Inhaltselement umfasst, das mit der Ansicht der physischen Umgebung überlagert ist.

5. Verfahren nach Anspruch 1, wobei die geometrischen Informationen mindestens eines von einer Blaupause für die physische Umgebung, einer dreidimensionalen Darstellung der physischen Umgebung und semantischen Informationen bezüglich vertikaler und horizontaler Oberflächen in der physischen Umgebung umfassen.

6. Verfahren nach Anspruch 5, wobei das Bestimmen der empfohlenen Avatar-Platzierung (890) ferner auf den semantischen Informationen bezüglich horizontaler Oberflächen in der physischen Umgebung basiert.

7. Verfahren nach einem der Ansprüche 1-6, wobei die Angabe der empfohlenen Avatar-Platzierung (890) mindestens eines umfasst, das aus einem Avatar-Umriss an der empfohlenen Avatar-Platzierung (890) in der Umgebungsdarstellung (860) und einer Markierung an der empfohlenen Avatar-Platzierung (890) in der Umgebungsdarstellung (860) ausgewählt ist.

8. Verfahren nach einem der Ansprüche 1-6, ferner umfassend das Ausrichten (430) der Umgebungsdarstellung (860) basierend auf den geometrischen Informationen, wobei die empfohlene Avatar-Platzierung (890) ferner auf der Ausrichtung der Umgebungsdarstellung (860) basiert.

9. Verfahren nach einem der Ansprüche 1-8, ferner umfassend:
Erhalten geometrischer Informationen, die einer zweiten physischen Umgebung (250) einer zweiten Kommunikationsvorrichtung (210) zugeordnet sind, die an der Mehrbenutzer-Kommunikationssitzung teilnimmt;
Bestimmen einer zweiten empfohlenen Avatar-Platzierung basierend auf den geometrischen Informationen, die der zweiten physischen Umgebung (250) zugeordnet sind, dem Aktivitätstyp und der empfohlenen Avatar-Platzierung (890); und
Anzeigen einer Angabe der zweiten empfohlenen Avatar-Platzierung in der Umgebungsdarstellung (860).

10. Verfahren nach Anspruch 9, ferner umfassend:
Empfangen einer ersten ausgewählten Avatar-Platzierung und einer zweiten ausgewählten Avatar-Platzierung;
Anpassen (570) einer ersten räumlichen Position der ersten ausgewählten Avatar-Platzierung oder einer zweiten räumlichen Position der zweiten ausgewählten Avatar-Platzierung in der Umgebungsdarstellung (860); und
Anzeigen (590) eines ersten Avatars an der ersten ausgewählten Avatar-Platzierung und eines zweiten Avatars an der zweiten ausgewählten Avatar-Platzierung in der Umgebungsdarstellung (860).

11. Verfahren nach Anspruch 10, wobei das Anpassen der ersten räumlichen Position oder der zweiten räumlichen Position ein Anpassen (580) einer Höhe der ersten ausgewählten Avatar-Platzierung oder einer Höhe der zweiten ausgewählten Avatar-Platzierung in der Umgebungsdarstellung (860) basierend auf den geometrischen Informationen, die der physischen Umgebung zugeordnet sind, und den geometrischen Informationen, die der zweiten physischen Umgebung (250) zugeordnet sind, umfasst.

12. Verfahren nach einem der Ansprüche 1-11, ferner umfassend:
Bestimmen (650) einer empfohlenen Inhaltsplatzierung (895) für ein gemeinsam genutztes Inhaltselement basierend auf den geometrischen Informationen und dem Aktivitätstyp; und
Anzeigen (690) einer Angabe der empfohlenen Inhaltsplatzierung (895) für das gemeinsam genutzte Inhaltselement in der Umgebungsdarstellung (860).

13. Verfahren nach Anspruch 12, ferner umfassend ein Identifizieren (640) von Kandidaten-Inhaltsplatzierungen in der Umgebungsdarstellung (860) basierend auf den geometrischen Informationen und dem Aktivitätstyp, wobei die empfohlene Inhaltsplatzierung (895) aus den Kandidaten-Inhaltsplatzierungen ausgewählt (660) wird.

14. Nichtflüchtiges computerlesbares Medium, umfassend Computercode, der durch einen oder mehrere Prozessoren ausführbar ist, um das Verfahren nach einem der Ansprüche 1-13 durchzuführen.

15. System (1000), umfassend:
einen oder mehrere Prozessoren; und
ein oder mehrere computerlesbare Medien, umfassend computerlesbaren Code, der durch den einen oder die mehreren Prozessoren ausführbar ist, um das Verfahren nach einem der Ansprüche 1-13 durchzuführen.

## Revendications

1. Un procédé comprenant :
l'obtention (310) d'une information géométrique associée à un environnement physique d'un dispositif de communication (200) participant à une session de communication multiutilisateur ; **caractérisé par**
la détermination (320) d'un type d'activité pour la session de communication multiutilisateur ;
la détermination d'un placement recommandé d'avatar (890), basé sur l'information géométrique et le type d'activité ; et
l'affichage (340) d'une indication du placement recommandé d'avatar (890) dans une représentation environnementale (860) de la session de communication multiutilisateur.

2. Le procédé de la revendication 1, comprenant en outre l'identification (440) de placements candidats d'avatar dans la représentation environnementale (860), basés sur le type d'activité et l'information géométrique, la détermination du placement recommandé d'avatar (890) comprenant la sélection (460) du placement recommandé d'avatar (890) parmi les placements candidats d'avatar.

3. Le procédé de la revendication 1, dans lequel la représentation environnementale (860) comprend un environnement virtuel ou un environnement de réalité mélangée basé sur une vue de l'environnement physique.

4. Le procédé de la revendication 3, dans lequel l'environnement de réalité mélangée comprend au moins un élément de contenu virtuel superposé avec la vue de l'environnement physique.

5. Le procédé de la revendication 1, dans lequel l'information géométrique comprend au moins l'une d'entre une ébauche de l'environnement physique, une représentation tridimensionnelle de l'environnement physique, et une information sémantique relative à des surfaces horizontales et verticales de l'environnement physique.

6. Le procédé de la revendication 5, dans lequel la détermination du placement recommandé d'avatar (890) est en outre basée sur l'information sémantique relative aux surfaces horizontales de l'environnement physique.

7. Le procédé de l'une des revendications 1 à 6, dans lequel l'indication du placement recommandé d'avatar (890) comprend au moins l'un choisi parmi un contour d'avatar à l'endroit du placement recommandé d'avatar (890) dans la représentation environnementale (860), et un marqueur à l'endroit du placement recommandé d'avatar (890) dans la représentation environnementale (860).

8. Le procédé de l'une des revendications 1 à 6, comprenant en outre l'orientation (430) de la représentation environnementale (860) sur la base de l'information géométrique, le placement recommandé d'avatar (890) étant en outre basé sur l'orientation de la représentation environnementale (860).

9. Le procédé de l'une des revendications 1 à 8, comprenant en outre :
l'obtention d'une information géométrique associée à un second environnement physique (250) d'un second dispositif de communication (210) participant à la session de communication multiutilisateur ;
la détermination d'un second placement recommandé d'avatar basé sur l'information géométrique associée au second environnement physique (250), au type d'activité, et au placement recommandé d'avatar (890) ; et
l'affichage d'une indication du second placement recommandé d'avatar dans la représentation environnementale (860).

10. Le procédé de la revendication 9, comprenant en outre :
la réception d'un premier placement sélectionné d'avatar et d'un second placement sélectionné d'avatar ;
l'ajustement (570) d'une première position spatiale du premier placement sélectionné d'avatar ou d'une seconde position spatiale du second placement sélectionné d'avatar dans la représentation environnementale (860) ; et
l'affichage d'un premier avatar à l'endroit du premier placement sélectionné d'avatar et d'un second avatar à l'endroit du second placement sélectionné d'avatar dans la représentation environnementale (860).

11. Le procédé de la revendication 10, dans lequel l'ajustement de la première position spatiale ou de la seconde position spatiale comprend l'ajustement (580) d'une hauteur du premier placement sélectionné d'avatar ou d'une hauteur du second placement sélectionné d'avatar dans la représentation environnementale (860) sur la base de l'information géométrique associée à l'environnement physique et de l'information géométrique associée au second environnement physique.

12. Le procédé de l'une des revendications 1 à 11, comprenant en outre :
la détermination (650) d'un placement recommandé de contenu (895) pour un élément de contenu partagé, sur la base de l'information géométrique et du type d'activité ; et
l'affichage (690) d'une indication du placement recommandé de contenu (895) pour l'élément de contenu partagé dans la représentation environnementale (860).

13. Le procédé de la revendication 12, comprenant en outre l'identification (640) de placements candidats de contenu dans la représentation environnementale (860), sur la base de l'information géométrique et du type d'activité, le placement recommandé de contenu (895) étant sélectionné (660) parmi les placements candidats de contenu.

14. Un support non transitoire lisible par calculateur comprenant du code de calculateur, exécutable par un ou plusieurs processeurs, pour mettre en oeuvre le procédé de l'une des revendications 1 à 13.

15. Un système (1000), comprenant :
un ou plusieurs processeurs ; et
un ou plusieurs supports lisibles par calculateur comprenant du code lisible par calculateur exécutable par les un ou plusieurs processeurs pour mettre en oeuvre le procédé de l'une des revendications 1 à 13.
